# EUROPEAN PATENT APPLICATION

(11) **EP 2 623 976 A2**
(43) Date of publication of application: **07.08.2013**
(21) Application number: 13154027.0
(22) Date of filing: 05.02.2013
(51) Int. Cl.: G01N 27/90

(54) **Gas turbine disc inspection using flexible eddy current array probe**

(30) Priority: 06.02.2012 US 201213366538
(71) Applicant: General Electric Company, Schenectady, New York 12345 (US)
(72) Inventor: Boles, Justin Carl, Schenectady, NY 12345 (US); Remillard, Matthew, Schenectady, NY 12345 (US); Bureau, Jean Francois, Lewiston, PA 17044 (US)
(74) Representative: Picker, Madeline Margaret

(57) **Abstract**

A probe 200 may be used to inspect objects. The probe may be configured with a flexible eddy current array 210 mounted in a flexible film such that the flexible eddy current array conforms to a shape of an object when applied to the object, a probe body connected to at least one section of the flexible eddy current array, and a communications component 260 configured to receive and output from the flexible eddy current array.

## Description

### BACKGROUND

The present disclosure relates to gas turbines and in particular to systems and methods for inspecting gas turbine discs using a flexible eddy current array probe.

Gas turbines, which may also be referred to as combustion turbines, are internal combustion engines that accelerate gases, forcing the gases into a combustion chamber where heat is added to increase the volume of the gases. The expanded gases are then directed towards a turbine to extract the energy generated by the expanded gases. Gas turbines have many practical applications, including use as jet engines and in industrial power generation systems.

The acceleration and directing of gases within a gas turbine are often accomplished using rotating blades. Extraction of energy is typically accomplished by forcing expanded gases from the combustion chamber towards turbine blades that are spun by the force of the expanded gases exiting the gas turbine through the turbine blades. Turbine blades may be mounted on discs within the gas turbine. Other discs and other components may be used within the gas turbine for other functions. Such components may be metallic. Due to the high temperatures of the environment within an operating gas turbine, such discs will endure extreme operating conditions.

Components of gas turbines must be inspected on a regular basis to determine if any defects have developed during operation of the gas turbine. Such components may be non-destructively tested after a defined operation interval to ensure continued safe operation. An inspection may be performed to locate surface and/or subsurface flaws. In discs forged from magnetic material, such as Cr-Mo-V steel, one method of inspection that provides adequate flaw detection sensitivity is florescent magnetic particle inspection. Other materials used to construct discs include Inconel^{™} (trademark of the Special Metals Corporation) 706 and 718 super alloys. A property of such austenitic nickel-chromium-based super alloys (i.e., Inconel) is that these alloys are non-magnetic, making the discs constructed from such alloys difficult to inspect with more traditional methods. Magnetic particle inspection may not be effective due to the absence of a magnetic field. Liquid and florescent penetrant may be utilized to inspect Inconel but does not provide the sensitivity of magnetic particle inspection.

Eddy current testing can be performed on discs constructed of conductive and/or non-magnetic materials. Eddy current testing may use eddy current coils designed to generate a changing magnetic field that may interact with the disc to generate an eddy current. Variations in the phase and magnitude of the generated eddy current may be measured by measuring changes to the current flowing in the coil. Alternatively, changes in phase and magnitude of the generated eddy current may be measured using a second coil. Changes in the phase and magnitude of the generated eddy current may indicate one or more flaws in the discs, such as small cracks that may lead to failures if not addressed. While eddy current inspection methods may provide equivalent sensitivity to magnetic particle inspection methods, current eddy current inspection methods are limited to single small element and rigid array probes. Due to their small size and rigidity, such probes make inspection of large discs and other large components that have varying and multiple geometries difficult and time-consuming, and therefore expensive because such inspections require that the turbine be taken out of service resulting in costly downtime for the operator of the turbine.

### BRIEF DESCRIPTION OF THE INVENTION

A probe is disclosed for gas turbine component inspection that may include a flexible eddy current array mounted in a flexible film such that the flexible eddy current array conforms to a shape of an object when applied to the object, a probe body connected to at least one section of the flexible eddy current array, and a communications component configured to receive and output from the flexible eddy current array.

A system is disclosed that may include a scanning arm configured at a center of a gas turbine disc and a probe mounted on the scanning arm. The probe may include a flexible eddy current array mounted in a flexible film such that the flexible eddy current array conforms to a shape of an object when applied to the object, a probe body connected to at least one section of the flexible eddy current array, and a communications component configured to receive and output from the flexible eddy current array.

A method is disclosed wherein a flexible eddy current array mounted in a flexible film may be applied to a probe. The probe may be applied to a surface of an object, wherein the flexible eddy current array conforms to a shape of the object. The probe may be activated and output from the flexible eddy current array may be received.

The foregoing summary, as well as the following detailed description, is better understood when read in conjunction with the drawings. For the purpose of illustrating the claimed subject matter, there is shown in the drawings examples that illustrate various embodiments; however, the invention is not limited to the specific systems and methods disclosed.

### BRIEF DESCRIPTION OF THE DRAWINGS

These and other features, aspects, and advantages of the present subject matter will become better understood when the following detailed description is read with reference to the accompanying drawings, wherein:
Figure 1 is a non-limiting example of a flexible eddy current array mounted in a film.
Figure 2 is a non-limiting example of a probe configured with a flexible eddy current array.
Figure 3 is a non-limiting example of a probe in use for inspecting a gas turbine disc.
Figure 4 is a non-limiting example of a probe configured with a flexible eddy current array and positioned on an object.
Figure 5 is another non-limiting example of a probe configured with a flexible eddy current array and positioned on an object.
Figure 6 is another non-limiting example of a probe configured with a flexible eddy current array.
Figure 7 is a non-limiting example of a plurality of probes in use for inspecting a gas turbine disc.
Figure 8 is another non-limiting example of a plurality of probes in use for inspecting a gas turbine disc.

### DETAILED DESCRIPTION OF EMBODIMENTS OF THE INVENTION

In an embodiment, flexible eddy current coil technologies may provide an efficient means for inspecting large cross-sections of discs and any other components with multiple geometries. In such an embodiment, one or more flexible eddy current coils may be placed in an array in a flexible film that may contour to the unique geometries of a gas turbine disc. The flexible eddy current film may then be applied to the metallic discs and moved across the surface of the disc to scan for both surface and subsurface imperfections.

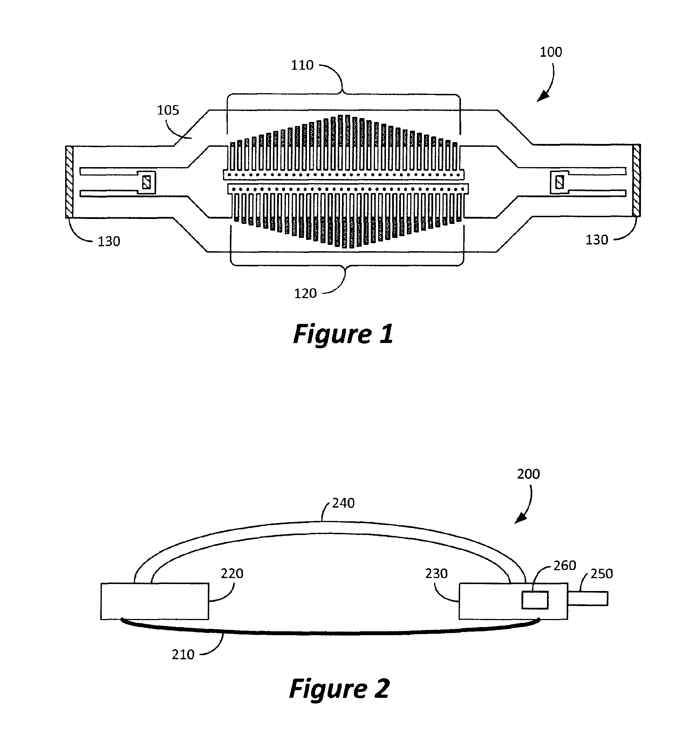

Figure 1 illustrates a non-limiting example flexible eddy current coil array 100. Eddy current coils 110 and 120 may be mounted on flexible printed circuit board (PCB) 105. Flexible PCB 105 may be any type of flexible film or flexible material that may be configured with one or more eddy current coils.

In an embodiment, as shown in Figure 1, eddy current coils 110 and 120 may be configured in two rows opposite one another and staggered such that each coil overlaps its opposite coil, for example by 50%. While any number of coils (may also be referred to as "channels") are contemplated, in one embodiment 64 coils may be used in total (i.e., 32 in each of eddy current coils 110 and 120 as shown in Figure 1) while in another embodiment 128 coils may be used. Any number of coils, number of rows of coils, and any configuration of coils may be used and mounted in any type of flexible film or material. All such embodiments are contemplated as within the scope of the present disclosure.

Connectors 130 may be configured on flexible eddy current coil array 100 to power the array and/or to receive output from eddy current coils 110 and 120. Connectors 130 may be any type of connectors, including zero insertion force (ZIF) connectors and flexible printed circuit (FPC) connectors.

Figure 2 illustrates a side view of exemplary flexible eddy current coil array probe 200. Flexible eddy current coil array 210 may be configured on probe 200, and may be any type of flexible eddy current coil array as described herein, such as flexible eddy current coil array 100 of Figure 1. The ends of flexible eddy current coil array 210 may be restrained or otherwise held in place on the body of probe 200 by restraints 220 and 230, allowing the center portion of flexible eddy current coil array 210 to remain flexible, enabling it to adapt to various curvatures and geometries. Restraints 220 and 230 may be connected by member 240 that may be flexible as well, allowing restraints 220 and 230 to move closer together and further apart as flexible eddy current coil array 210 flexes to adapt to the shape of the disc or other surface to which it is applied. Communication components 260 may communicate with or otherwise receive data from and/or provide power to flexible eddy current coil array 210. Connector 250 may be configured on probe 200 to provide a means for connecting communication components 260 to external devices and/or for powering flexible eddy current coil array 210 and/or to receiving output from flexible eddy current coil array 210. Note that communications components 260 may be any type of communications components, including wired and wireless communications component, and/or any type of power components and/or any means that may provide power and/or communications access to probe 200. Note also that the configuration, positions, and numbers of elements of probe 200 may vary according to design choice. All such embodiments are contemplated as within the scope of the present disclosure.

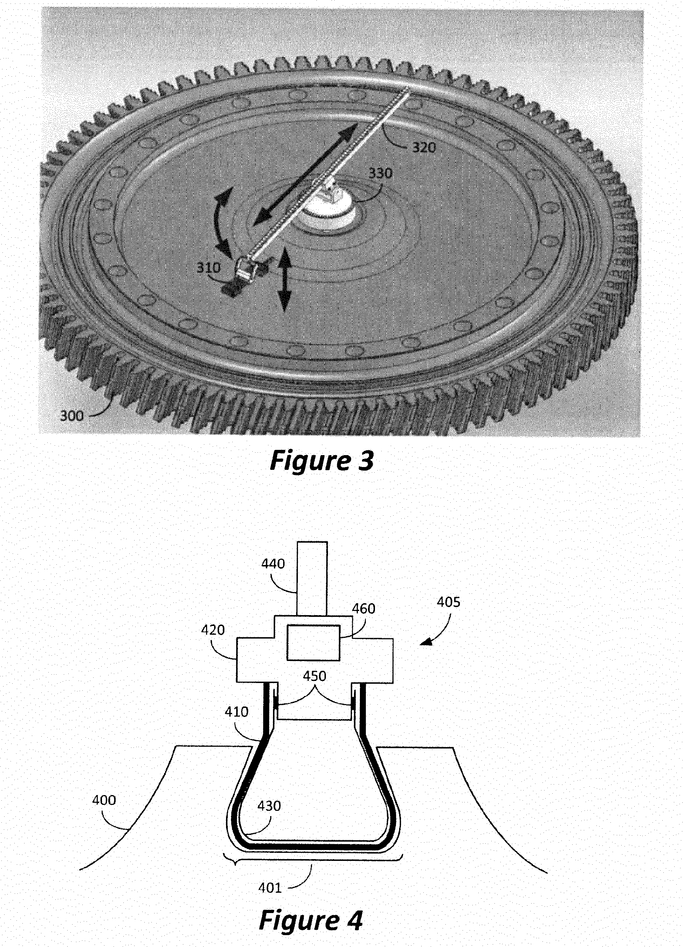

Figure 3 illustrates the use of a probe, such as probe 200 of Figure 2, to inspect a disc according to an embodiment. Probe 310 may be used to inspect disc 300. Probe 310 may be configured on scanning arm 320. Scanning arm 320 and probe 310 may be configured to provide probe 310 with three degrees of freedom. Scanning arm 320 may be configured on wheel 330 such that scanning arm 320 may freely move about wheel 330. Scanning arm 320 may be configured to move towards and away from wheel 330, allowing probe 310 to span the entire radius or a portion of the radius of disc 300. Scanning arm 320 may also be configured to pivot at wheel 330 or otherwise be configured to allow probe 310 to move up and down relative to the surface of disc 300, allowing probe 310 to maintain contact with the surface of disc 300. In some embodiments no encoding may be used, while in other embodiments a small wheel encoder may be attached to the scanning arm to allow for precise positioning of probe 310. Wheel 330 may have markings on it indicating angular distance, in one embodiment, in degrees. Scanning arm 320 may have markings on it indicating the distance from the center of wheel 330 to the center of probe 310 or to the end of scanning arm 320 that terminates at probe 310.

In an embodiment, probe 310 may be configured such that the eddy current coils of probe 310 make contact with the surface of disc 300. Probe 310 may be activated and may be moved in a circular manner about the center of disc 300, moving towards and away from the center of disc 300 as needed to obtain a complete inspection of desired areas of disc 300. Data and/or output from probe 310 may be received at one or more devices and/or by a human operator via a connector on probe 310. The data collected from probe 310 may be presented in a time-based C-scan format or any other format. Note that the movements of probe 310 and related components (e.g., scanning arm 320 and wheel 330) may be automated or performed by hand.

In some embodiments, a flexible eddy current array may be used with a molding or other shaping device so that such an array may be used to inspect a particular geometry. Figure 4 illustrates a non-limiting example of such an embodiment. It may be desired that area 401 of object 400, which may form any shape that may be formed by a disc (e.g., a balance weight groove on a gas turbine disc) or any shape formed by any other object, be inspected. Probe 405 may be used for such an inspection and may include probe body 420 connected to mold 430. Flexible eddy current coil array 410 may be configured on probe 405 about mold 430, connecting to probe body 420 using any means, including one or more ZIF connectors and FCP connectors. In this example, flexible eddy current coil array 410 may conform to the shape of mold 430. Probe body 420 may include communication components 460 that may communicate with or otherwise receive data from and/or provide power to flexible eddy current coil array 410. Such data and/or power may be received and/or provided to probe body 420 via connector 440 that may be any type of connector, including a Gems connector. Note that communications components 460 may be any type of communications components, including wired and wireless communications component, and/or any type of power components and/or any means that may provide power and/or communications access to probe 405.

To allow probe 405 to be configured with different molds designed for various shapes, mold 430 may connect to probe body 420 at connectors 450 that may allow for the removal and attachment of various molds for various shapes. Mold 430 may be rigid, thereby defining a rigid shape for flexible eddy current coil array 410 when array 410 is configured on probe 405. Alternatively, mold 430 may be flexible, thereby allowing flexible eddy current coil array 410 to retain flexibility and the ability to make full contact with the inspected surface while disposing flexible eddy current coil array 410 to a particular shape that will facilitate inspection of the surface. Note that in Figure 4, gaps between the surface and flexible eddy current coil array 410 and other distances between components of probe 405 may be exaggerated to clearly illustrate the configuration of the components and the placement of flexible eddy current coil array 410 in object 400. Moreover, in some embodiments other components and elements may be used, and those shown in Figure 4 may not be used in all embodiments. All such embodiments are contemplated as within the scope of the present disclosure.

In an embodiment, probe 405 may be configured such that flexible eddy current coil array 410 makes contact with the surface of area 401. Probe 405 may be activated and may be moved within area 401 in a manner such that all of area 401 of interest is inspected. Data and/or output from probe 405 may be received at one or more devices and/or by a human operator via connector 440. The data collected from probe 405 may be presented in a time-based C-scan format or any other format. Note that the movements of probe 405 and related components may be automated or performed by hand.

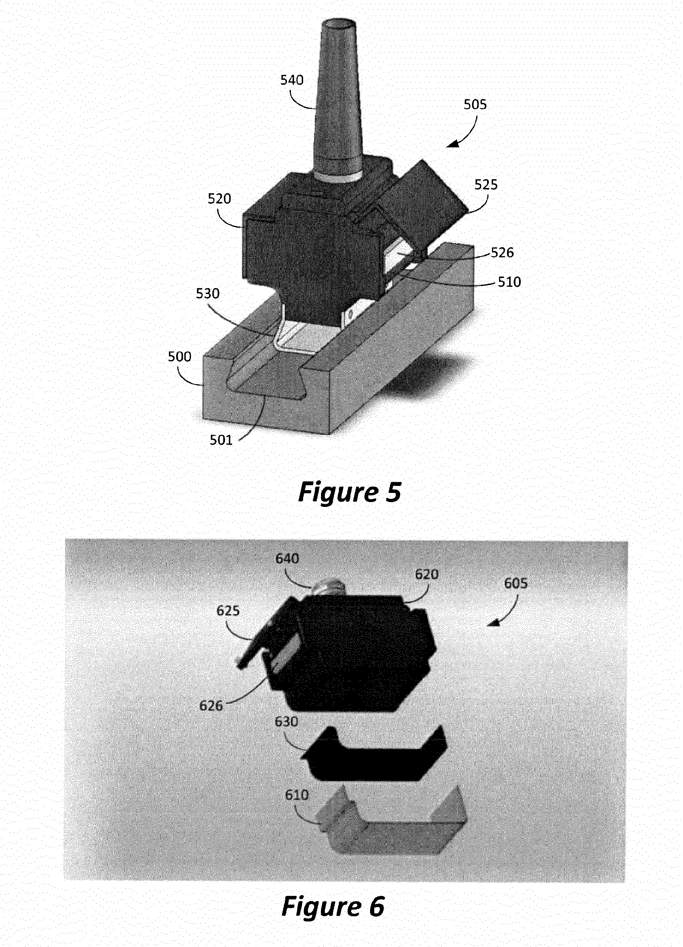

Figure 5 illustrates a non-limiting example of a similar embodiment where probe 505 is configured with mold 530 that helps flexible eddy current coil array 510 form a shape conducive to inspecting area 501 of object 500 that has a particular shape. Probe body 520 of probe 505 may be connected to mold 530 and flexible eddy current coil array 510, which may be configured about mold 530. Flexible eddy current coil array 510 may connect to probe body 520 at connector 526, which may be any type of connecter, including a ZIF connector and an FCP connector. To facilitate ease of removal and attachment of flexible eddy current coil array 510, probe body 520 may include one or more doors 525 that allow access to, and protect when closed, connector 526 and connection points of flexible eddy current coil array 510. Probe body 520 may include communications components that may communicate with or otherwise receive data from and/or provide power to flexible eddy current coil array 510. Such data and/or power may be received and/or provided to probe body 520 via connector 540 that may be any type of connector, including a Gems connector. Note that communications components of probe 505 may be any type of communications components, including wired and wireless communications component, and/or any type of power components and/or any means that may provide power and/or communications access to probe 505.

In an embodiment, probe 505 may be configured such that flexible eddy current coil 510 makes contact with the surface of area 501. Probe 505 may be activated and may be moved within area 501 in a manner such that all of area 501 of interest is inspected. Data and/or output from probe 505 may be received at one or more devices and/or by a human operator via connector 540. The data collected from probe 505 may be presented in a time-based C-scan format or any other format. Note that the movements of probe 505 and related components may be automated or performed by hand.

Figure 6 illustrates a non-limiting example of a similar embodiment where probe 605 is configured with mold 630 that helps flexible eddy current coil array 610 form a shape conducive to inspecting an area of an object that has a particular shape. As shown in Figure 6, mold 630 may be detachably connected to probe body 620. Likewise, flexible eddy current coil array 610 may be detachably connected to probe body 620 and may be configured about mold 630 such that flexible eddy current coil array 610 forms substantially the same shape as that of mold 630. Flexible eddy current coil array 610 may connect to probe body 620 at connector 626, which may be any type of connecter, including a ZIF connector and an FCP connector. To facilitate ease of removal and attachment of flexible eddy current coil array 610, probe body 620 may include one or more doors 625 that allow access to, and protect when closed, connector 626 and connection points of flexible eddy current coil array 610. Probe body 620 may include communications components that may communicate with or otherwise receive data from and/or provide power to flexible eddy current coil array 610. Such data and/or power may be received and/or provided to probe body 620 via connector 640 that may be any type of connector, including a Gems connector. Note that communications components of probe 605 may be any type of communications components, including wired and wireless communications component, and/or any type of power components and/or any means that may provide power and/or communications access to probe 605.

Note that the probes and flexible eddy current coils of Figures 4, 5, and 6 may be of any size and shape, and may be configured to be used to inspect any type, size, and shape of object. In an embodiment, a probe such as probe 405, 505, or 605 may have a surface length between 50 and 60mm and at least 64 channels or coils that each have a diameter of between 1 and 2mm and that are arranged in two rows of 32 coils or channels each, with the rows having a 50% overlap. In an alternative embodiment, a probe such as probe 405, 505, or 605 may have a surface length of between 30 and 40mm and at least 42 coils or channels that each have a diameter of between 1 and 2mm that are arranged in two rows of 21 channels or coils each, with the rows having a 50% overlap. Any other configurations may be used and all such embodiments are contemplated as within the scope of the present disclosure.

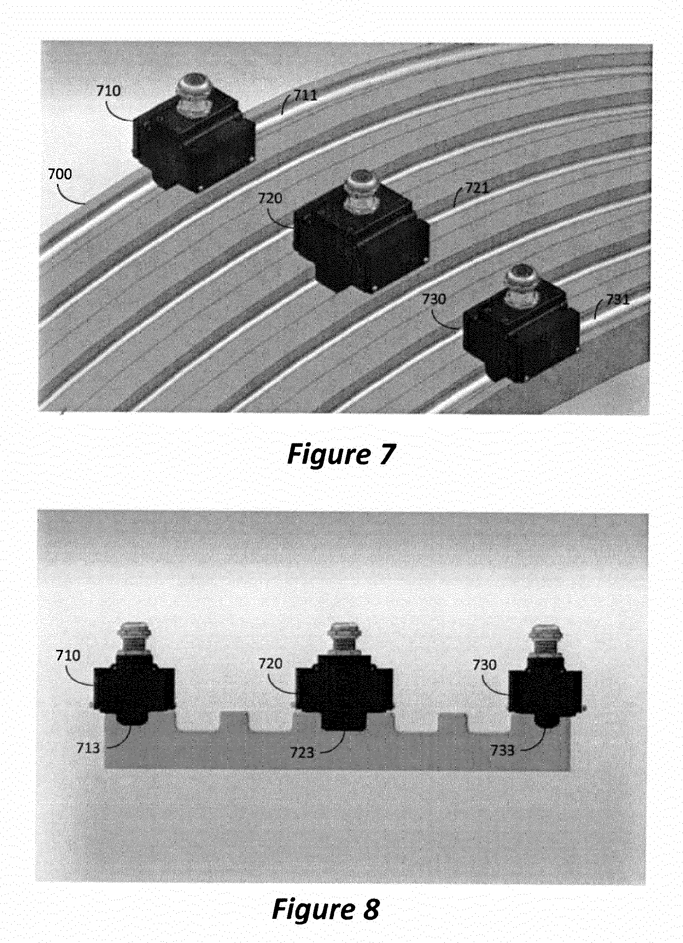

Figure 7 illustrates the use of one or more probes, such as probe 405, 505, or 605 of Figures 4, 5, and 6, respectively, to inspect a disc according to an embodiment. In an embodiment, one such probe may be used to inspect areas of a particular geometry, while in another embodiment, multiple probes may be used to inspect several areas at once, and each area inspected may have similar or varying geometry compared to other areas being inspected. As shown in Figure 7, probes 710, 720, and 730 may be used to inspect disc 700. Each of probes 710, 720, and 730 may be configured with a mold as described herein, and each mold may be particularly designed for a particular geometry. For example, the mold in use in probes 710 and 720 may be a similar shape, while that in use in probe 730 may be of a different shape than that of probes 710 and 720 as shown in Figure 7. Alternatively, each probe in use in multiple probe embodiments may have a distinct shape formed by distinctly shaped molds, while in other embodiments each probe in used in multiple geometry probe embodiments may have similar or identical shapes formed by similarly or identically shaped molds. All such embodiments are contemplated as within the scope of the present disclosure.

Each of probes 710, 720, and 730 may be configured on a scanning arm (not shown) dedicated to that each respective probe, or alternatively each of the probes may be connected to a single scanning arm configured with components to which each of the probes may be attached. Such a scanning arm may be configured in any way that scanning arm 320 of Figure 3 may be configured, including on a wheel such that the scanning arm may freely move about the wheel.

In an embodiment, each of probes 710, 720, and 730 may be configured such that the eddy current coils of probes 710, 720, and 730 make contact with the surface of disc 700. Each of probes 710, 720, and 730 may be activated and may be moved in a circular manner about the center of disc 700, moving within grooves 711, 721, and 731, respectively, or within any other shape or area of disc 700 as needed to obtain a complete inspection of desired areas of disc 700. Data and/or output from probes 710, 720, and 730 may be received at one or more devices and/or by a human operator via a connector on each of the probes. The data collected from probes 710, 720, and 730 may be presented in a time-based C-scan format or any other format. Note that the movements of probes 710, 720, and 730 and related components (e.g., scanning arms, wheels, etc.) may be automated or performed by hand.

Figure 8 illustrates a side view of the embodiment illustrated in Figure 7. As can be seen in Figure 8, each of probes 710, 720, and 730 may have molds attached that create shapes that are distinct from one another. For example, shape 713 of probe 710 is different from shape 723 of probe 720, which is different still from shape 733 of probe 730. Differently shaped molds may be used with several probes to simultaneously inspect differently shaped grooves and other areas of a disc or any other component of a gas turbine.

By using the embodiment contemplated herein, objects of various shapes may be inspected using eddy current coil technology. In the inspection of gas turbine components, the application of the presently disclosed embodiments may increase efficiency by allowing for the inspection of large areas of a disc with a relatively large probe, thus reducing inspection times. The present embodiments may also reduce costs by allowing the use of a single probe in the inspection of multiple geometries.

This written description uses examples to disclose the subject matter contained herein, including the best mode, and also to enable any person skilled in the art to practice the invention, including making and using any devices or systems and performing any incorporated methods. The patentable scope of this disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A probe (200) comprising:
a flexible eddy current array (210) mounted in a flexible film such that the flexible eddy current array conforms to a shape of an object when applied to the object;
a probe body connected to at least one section of the flexible eddy current array (210); and
a communications component (260) configured to receive and output from the flexible eddy current array (210).

2. The probe of claim 1, wherein the probe body comprises a first restraint (200) connected to a first section of the flexible eddy current array and a second restraint (230) connected to a second flexible eddy current array.

3. The probe of claim 2, wherein the first restraint (200) and the second restraint (230) are connected by a flexible member.

4. The probe of claim 2 or claim 3, wherein the first restraint (220) and the second restraint (230) are within a single housing.

5. The probe of any preceding claim, wherein the flexible eddy current array (210) is detachably connected to the probe body.

6. The probe of any preceding claim, wherein the probe body comprises a mold (430) about which the flexible eddy current array is configured.

7. The probe of claim 6, wherein the mold (430) is detachably connected to the probe body (420).

8. A system comprising:
a scanning arm (320) configured at a center of a disc (300); and
a probe (200) mounted on the scanning arm, the probe comprising:
a flexible eddy current array (210) mounted in a flexible film such that the flexible eddy current array conforms to a shape of an object when applied to the object;
a probe body connected to at least one section of the flexible eddy current array (210); and
a communications component (260) configured to receive and output from the flexible eddy current array (210).

9. The system of claim 8, wherein the scanning arm (320) is configured to allow the probe to move towards the center of the disc and away from the center of the disc (300).

10. The system of claim 8 or claim 9, wherein the scanning arm (320) is configured to allow the probe to move about the center of the disc (300).

11. A method comprising:
applying a flexible eddy current array mounted in a flexible film to a probe;
applying the probe to a surface of an object, wherein the flexible eddy current array conforms to a shape of the object;
activating the probe; and
receiving output from the flexible eddy current array.

12. The method of claim 11, further comprising securing the flexible eddy current array with a first restraint connected to a first section of the flexible eddy current array and a second restraint connected to a second section of the flexible eddy current array, and preferably further comprising:
connecting the first restraint and the second restraint with a flexible member, and/or
disposing the first restraint and the second restraint within a single housing.

13. The method of claim 11 or claim 12, further comprising at least one of:
detachably connecting the flexible eddy current array to the probe; and
connecting a mold to the probe such that the flexible eddy current array is configured about the mold.

14. The method of claim 11, 12 or 13, further comprising mounting the probe on a scanning arm configured at a center of a gas turbine disc.

15. The method of claim 14, further comprising at least one of:
moving the probe towards the center of the gas turbine disc and away from the center of the gas turbine disc; and
moving the probe about the center of the gas turbine disc.
